# EUROPÄISCHE PATENTSCHRIFT

(11) **EP 1 374 261 B1**
(45) Veröffentlichungstag und Bekanntmachung des Hinweises auf die Patenterteilung: **07.12.2005**
(21) Anmeldenummer: 02719675.7
(22) Anmeldetag: 08.03.2002
(51) Int. Cl.: H01F 27/12, H01F 27/32

(54) **TRANSFORMATOR MIT FORCIERTER FLÜSSIGKEITSKÜHLUNG**
TRANSFORMER WITH A FORCED LIQUID COOLING SYSTEM
TRANSFORMATEUR A REFROIDISSEMENT LIQUIDE FORCE

(30) Priorität: 04.04.2001 DE 10117847
(43) Veröffentlichungstag der Anmeldung: 02.01.2004
(73) Patentinhaber: SIEMENS AKTIENGESELLSCHAFT, 80333 München (DE)
(72) Erfinder: NICK, Wolfgang, 90419 Nürnberg (DE); SCHLOSSER, Reinhard, 94505 Bernried (DE); SCHMIDT, Heinz, 91096 Möhrendorf (DE); VAN HASSELT, Peter, 91058 Erlangen (DE)
(86) Internationale Anmeldenummer: PCT/DE2002/000902
(87) Internationale Veröffentlichungsnummer: WO 2002/082478

(56) Entgegenhaltungen:
- EP-A- 0 993 007
- US-A- 2 388 566
- US-A- 2 904 760
- US-A- 2 942 213
- US-A- 5 508 672

## Beschreibung

Die Erfindung liegt auf dem Gebiet der grundlegenden elektrischen Bauteile und ist bei der konstruktiven Ausgestaltung eines Transformators anzuwenden, der zum Zwecke der forcierten Flüssigkeitskühlung mit Leitflächen zur Kühlmittelführung versehen ist.

Zur forcierten Kühlung der Wicklungen und des den Magnetfluss führenden Kernes von Transformatoren werden als Kühlmittel Luft, Öl oder - bei Transformatoren mit supraleitenden Wicklungen aus Hochtemperatur-Supraleiter-Material (HTSL)- verflüssigte Gase eingesetzt. Um die Kühlung möglichst effektiv zu gestalten ist es üblich, dem Kühlmittel innerhalb des den Kern und die einander jeweils konzentrisch zugeordneten Ober- und Unter-Spannungswicklungen aufnehmenden, abgedichteten Kessels einem Strömungsweg vorzugeben. Bei einem bekannten Transformator dieser Art sind die einander jeweils konzentrisch zugeordneten Ober- und Unter-Spannungswicklungen in ringförmigen, taschenartigen Kammern angeordnet, die nach obenhin und damit zu dem übrigen Kesselvolumen hin offen sind. Unterhalb dieser taschenartigen Kammern ist eine weitere ringförmige, jedoch flach ausgebildete Kammer angeordnet, die mit Durchlassöffnungen zu den taschenartigen Kammern versehen ist. Frisches Kühlmittel strömt über einen Einlass in die flache Kammer ein, verteilt sich von dort in die taschenartigen Kammern, steigt in ihnen hoch und fließt dann in den übrigen Innenraum des Kessels und verlässt den Kessel über einen Auslass. Auf diese Weise nimmt das Kühlmittel zunächst Wärme aus dem Wicklungen und danach vom magnetischen Kern und der Wandung des Kessels ein schließlich der Stromzuführungen beziehungsweise Wicklungsanschlüsse auf. Die Wände der Kammern und die Oberflächen des Kernes und des Kessels bilden dabei Leitflächen für die Kühlmittelführung (US 4,424,502 A1).

US 5,508,672 offenbart einen flüssigkeitsgekühlten Transformator, bei dem die Strömungsbereiche zur Kühlung der Wicklung und des Kernes Strömungstechnisch parallel angeordnet sind.

Ausgehend von einem Transformator mit den Merkmalen des Oberbegriffes des Patentanspruches 1 liegt der Erfindung die Aufgabe zugrunde, die Strömung des flüssigen Kühlmittels so zu beeinflussen, dass eine möglichst effektive Kühlung aller zu kühlenden Teile erreicht wird.

Zur Lösung dieser Aufgabe ist gemäß der Erfindung vorgesehen, dass die Leitflächen derart angeordnet sind, dass der Kühlmittelstrom mehrere in Strömungsrichtung hintereinander angeordnete Strömungsbereiche aufweist, von denen ein erster den Wicklungen, ein zweiter den von den Wicklungen umgebenden Schenkeln des Kernes und ein dritter den übrigen Teilen des Kernes und der Wandung des Gehäuses zugeordnet ist.

Durch die gestaffelte Anordnung von drei spezifischen Strömungsbereichen für das Kühlmittel wird das Kühlmittel optimal genutzt. Diese Nutzung wird in konstruktiver Ausgestaltung der Erfindung im wesentlichen dadurch gewährleistet, dass der in Stufen an einem Kreisquerschnitt approximierte Kern des Transformators im Bereich der Wicklungen unter Bildung von Kanälen mit einer Bandage versehen wird, wodurch zwischen den Schenkeln und der Bandage Kühlmittelkanäle gebildet werden, die einen etwa dreieckförmigen Querschnitt aufweisen. Um diese Kanäle mit dem Kühlmittel durchströmen zu können, sind jeweils zwei einander konzentrisch zugeordnete Wicklungen mit Abstand sowohl zueinander als auch zum Kern angeordnet, wobei die innere der beiden einander jeweils konzentrisch zugeordneten Wicklungen auf der Außenseite eines ersten Tragzylinders und die äußere Wicklung auf der Innenseite eines zweiten Tragzylinders angeordnet ist; weiterhin ist zwischen dem ersten Tragzylinder und der Bandage ein Ringspalt gebildet und den beiden Wicklungen ist an der einen Stirnseite eine erste ringförmige Kammer und auf der anderen Stirnseite eine zweite ringförmige Kammer zugeordnet. Dabei ist die erste ringförmige Kammer mit dem Kühlmitteleinlass verbunden, sind die beiden ringförmigen Kammern mit in den Zwischenraum zwischen den beiden Wicklungen führenden Öffnungen versehen und grenzt die zweite Kammer an den Kern an und ist zum Ringspalt und zu den Kanälen hin offen. - Wenn man hierbei weiterhin darauf achtet, dass der Kühlmitteleinlass und der -auslass - einander gegenüberliegend - den beiden Stirnseiten der Wicklungen zugeordnet sind und die zweite ringförmige Kammer der dem Kühlmittelauslass zugewandten Stirnseite der Wicklungen zugeordnet ist, dann ergibt sich eine Kühlmittelströmung, die die verschiedenen Bereiche des Transformators in einer optimierten Reihenfolge erfasst.

Um zwischen dem magnetischen Kern des Transformators und der ihn umgebenden Bandage auch an Orten sehnenartiger Abweichung des Kernes vom Kreisquerschnitt die Bildung von Kühlkanälen ausreichenden Querschnittes zu gewährleisten, kann es zweckmäßig sein, zur Approximierung des Kernquerschnittes und des Umfanges der Bandage an einem Kreis an diesen Orten jeweils einen stabartigen Abstandhalter anzuordnen, der eine Abflachung der Bandage verhindert.

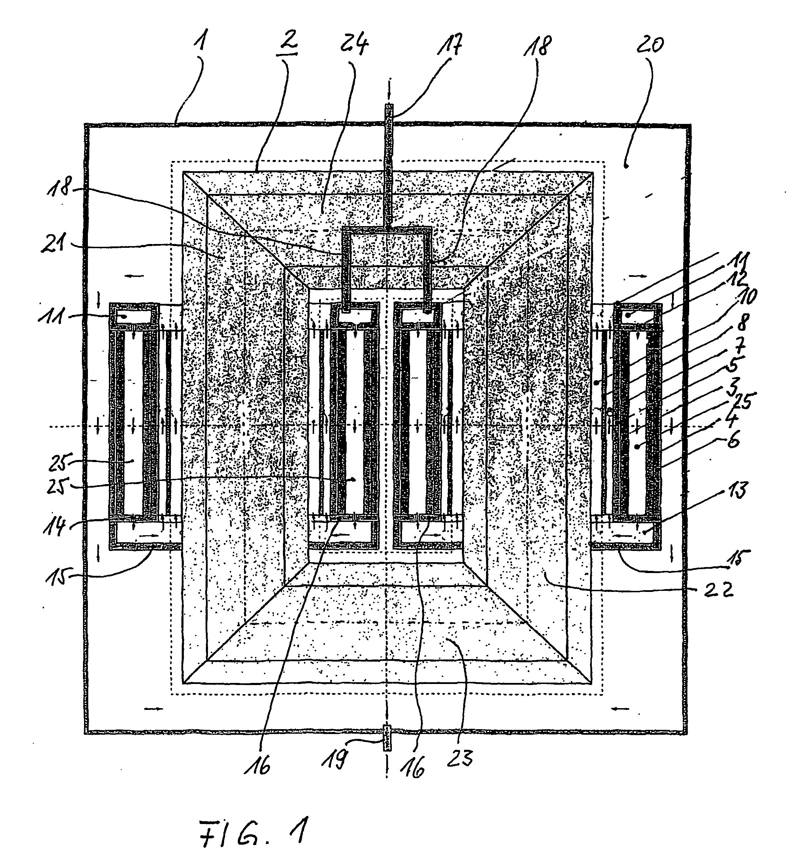

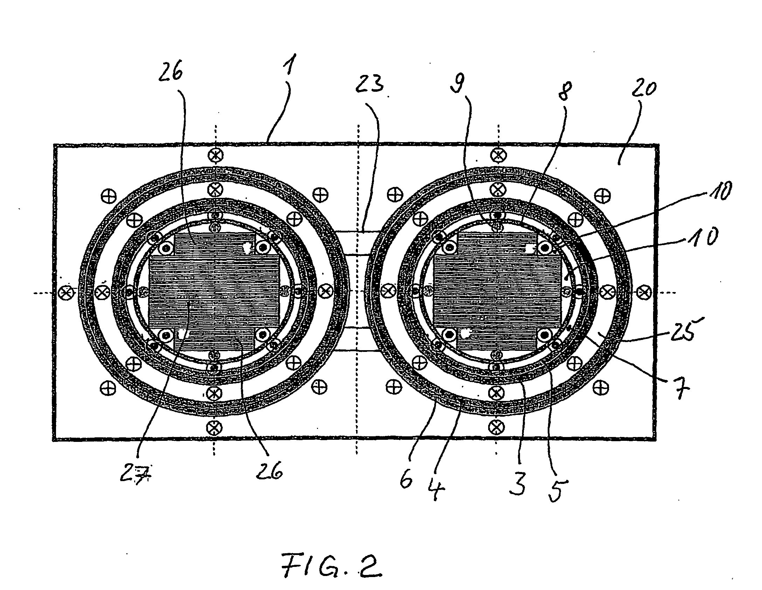

Ein Ausführungsbeispiel des neuen Transformators ist in den Figuren 1 und 2 schematisch dargestellt. Dabei zeigt
Figur 1 einen vertikalen Schnitt durch einen stehend angeordneten Transformator und
Figur 2 einen horizontalen Schnitt durch die Anordnung gemäß Figur 1.
Figur 1 zeigt einen Transformator, der einen Kessel 1 zur Aufnahme der elektrisch wirksamen Komponenten aufweist. Bei einem ölisolierten Transformator bildet der Kessel 1 das äußere Gehäuse. Bei einem Transformator mit supraleitenden Wicklungen bildet der Kessel die Innenwandung der Wärmeisolierung.

Innerhalb des Kessels befindet sich unter anderem der Magnetische Kern 2, der ein unteres Joch 23, einen linken Schenkel 21, einen rechten Schenkel 22 und ein oberes Joch 24 aufweist. Gemäß der Querschnittsdarstellung in Figur 2 ist der magnetische Kern 2 so aufgebaut, dass er einen Bereich 27 größeren rechteckigen Querschnittes und zwei Bereiche 26 kleineren, flachen rechteckigen Querschnittes aufweist. Auf diese Weise ist der Kernquerschnitt grob an eine Kreisfläche approximiert, wobei sich sehnenartige Abweichungen vom Kreisquerschnitt ergeben. Diese Abweichungen bilden flache oder rechtwinklige, gleichschenklige Dreiecke.

Den beiden Schenkeln 21 und 22 des magnetischen Kernes 2 sind jeweils zwei Wicklungen 3 und 4 zugeordnet, die mit Abstand konzentrisch zueinander angeordnet sind. Die innere Wicklung 3 ist dabei auch mit Abstand zum Kern 2 angeordnet. - Die Wicklung 3 befindet sich auf der Außenseite eines ersten Tragzylinders 5, während die Wicklung 4 auf der Innenseite eines zweiten Tragzylinders 6 angeordnet ist. Der zweite Tragzylinder 6 kann dabei beispielsweise aus einer Bandage bestehen.

Die Wicklungen 3 und 4 erstrecken sich über eine bestimmte Länge der beiden Schenkel 21 und 22. Über etwa die gleiche Länge sind die Schenkel mit jeweils einer Bandage 8 versehen, die einen stirnseitig offenen Hohlzylinder bildet. Die Schaffung der hohlzylindrischen Form wird dabei durch stabförmige Abstandhalter 9, die in den vom Kreisquerschnitt sehnenartig abweichenden Bereichen des Kernes 2 angeordnet sind, unterstützt. Durch die Anordnung der Bandage 8 werden Kanäle 10 gebildet, durch die das in dem Kessel 1 vorhandene Kühlmittel in weiter unten dargestellter Weise strömen kann.

Den beiden Wicklungen 3 und 4 ist stirnseitig eine erste ringförmige Kammer 11 zugeordnet, die mit Öffnungen 12 zu einem zwischen den Wicklungen befindlichen ringförmigen Zwischenraum 25 hin versehen ist. Den beiden Wicklungen 3 und 4 ist auf der entgegengesetzten Stirnseite eine zweite ringförmige Kammer 13 zugeordnet, die ebenfalls mit Öffnungen 14 zum Zwischenraum 25 hin versehen ist. Die zweite ringförmige Kammer ist dabei derart gestaltet, dass die Wandung 20 bis an den Kern 2 herangeführt ist, während die Wandung 16 nur bis zur ersten Wicklung 3 reicht. Dadurch ist die zweite ringförmige Kammer zu den Kanälen 10 und zu dem zwischen der Bandage 8 und dem ersten Tragzylinder 5 verlaufenden Ringspalt 7 hin offen.

Der Kessel 1 ist mit einem stirnseitig zum oberen Joch 24 angeordneten Kühlmitteleinlass 19 versehen, von dem aus Rohrführungen 18 zu den beiden ringförmigen Kammern 11 führen. Der Kühlmittelauslass 19 ist unterhalb des unteren Joches 23 in der Kesselwandung angeordnet.

Die Zuführung des innerhalb des Kessels befindlichen Kühlmittels 20 erfolgt über den Kühlmitteleinlass 17 und die Rohrführungen 18 zunächst zu den beiden ersten ringförmigen Kammern 11. Von dort strömt das Kühlmittel entsprechend den eingezeichneten Pfeilen (in Figur 2 ist zwischen Pfeilspitze - Kreis mit Punkt- und Pfeilende - Kreis mit Kreuz unterschieden) über die in den Kammern 11 vorgesehenen Öffnungen 12 in den ringförmigen Zwischenraum 25 zwischen den beiden Wicklungen 3 und 4. Dieser Zwischenraum bildet den ersten durch Leitflächen begrenzten effektiven Strömungsbereich des Kühlmittels. Aus dem Zwischenraum 25 tritt das Kühlmittel über die Öffnungen 14 in die zweite ringförmige Kammer 13 ein und strömt von dort in die Kanäle 10 und den Ringspalt 7 zwischen der Bandage 8 und dem ersten Tragzylinder 5. Die Kanäle 8 und der Ringspalt 7 bilden den zweiten effektiven Strömungsbereich. - Beim verlassen der Kanäle 10 und des Ringspaltes 7 strömt das Kühlmittel in den übrigen Innenraum des Kessels 1, wobei dieser Innenraum den dritten Strömungsbereich bildet. Beim Durchströmen dieses Bereiches werden insbesondere die Joche des Kernes und die Kesselwandung gekühlt. Das Kühlmittel strömt dann dem Kühlmittelauslass 19 zu.

## Patentansprüche

1. Transformator mit forcierter Flüssigkeitskühlung,
bei dem der Kern (2) und die einander jeweils konzentrisch zugeordneten Ober- und Unter-Spannungswicklungen (3, 4) in einem abgedichteten Kessel (1) angeordnet sind und dieser Kessel mit einem Einlass (17) und einem Auslass (19) für ein den Innenraum des Kessels durchströmendes flüssiges Kühlmittel (20) versehen ist und zwischen dem Einlass und dem Auslass Leitflächen angeordnet sind, die der Kühlmittelführung dienen,
**dadurch gekennzeichnet,**
**dass** die Leitflächen derart angeordnet sind, dass der Kühlmittelstrom mehrere in Strömungsrichtung hintereinander angeordnete Strömungsbereiche aufweist, von denen in Strömungsrichtung ein erster die Wicklungen (3-, 4), ein zweiter die von den Wicklungen umgebenen-Schenkel (21, 22) des Kernes (2) und ein dritter die übrigen Teile (23, 24) des Kernes und der Wandung des Gehäuses (1) enthält.

2. Transformator nach Anspruch 1,
**dadurch gekennzeichnet,**
**dass** zur Bildung der Leitflächen
- jeweils zwei einander konzentrisch zugeordnete Wicklungen (3, 4) mit Abstand sowohl zueinander als auch zum Kern (2) angeordnet sind,
- der in Stufen an einen Kreisquerschnitt approximierte Kern im Bereich der Wicklungen unter Bildung von Kanälen (10) mit einer Bandage (8) versehen ist,
- die innere der beiden einander jeweils konzentrisch zugeordneten Wicklungen (3) auf der Außenseite eines ersten Tragzylinders (5) und die äußere Wicklung auf der Innenseite eines zweiten Tragzylinders (6) angeordnet ist,
wobei zwischen dem ersten Tragzylinder und der Bandage ein Ringspalt (7) gebildet ist,
- den beiden Wicklungen (3, 4) an der einen Stirnseite eine erste ringförmige Kammer (11) und auf der anderen Stirnseite eine zweite ringförmige Kammer (13) zugeordnet ist,
wobei
- die erste ringförmige Kammer (11)) mit dem Kühlmitteleinlass verbunden ist,
- beide ringförmige Kammern (12, 13) mit in einen Zwischenraum (25) zwischen den beiden Wicklungen führenden Öffnungen (12, 14) versehen sind
- und die zweite Kammer (13) an den Kern (2) angrenzt und zum Ringspalt (7) und zu den Kanälen (10) hin offen ist.

3. Transformator nach Anspruch 2,
**dadurch gekennzeichnet,**
**dass** zur Approximierung des Querschnittes des Kernes (2) und des Umfanges der Bandage (8) an einen Kreis an Orten sehnenartiger Abweichungen des Kernes vom Kreisquerschnitt stabartige Abstandhalter (9) angeordnet sind.

4. Transformator nach Anspruch 2,
**dadurch gekennzeichnet,**
**dass** der zweite Tragzylinder (6) aus einer Stützbandage besteht.

## Claims

1. Transformer with forced liquid cooling, in which the core (2) and the upper and lower voltage windings (3, 4), which are each associated with one another concentrically, are arranged in a sealed tank (1) and this tank is provided with an inlet (17) and an outlet (19) for a liquid coolant (20) which flows through the interior of the tank, and guide surfaces which are used to guide the coolant are arranged between the inlet and the outlet, **characterized in that** the guide surfaces are arranged such that the coolant flow has two or more flow areas which are arranged one behind the other in the flow direction, a first of which in the flow direction contains the windings (3, 4), a second of which contains the limbs (21, 22) of the core (2) which are surrounded by the windings, and a third of which contains the other parts (23, 24) of the core and of the wall of the housing (1).

2. Transformer according to Claim 1, **characterized in that**, in order to form the guide surfaces,
- two windings (3, 4) which are associated with one another concentrically are in each case arranged at a distance both from one another and from the core (2),
- the core, which is approximated in steps to a circular cross section, is provided with a binding (8) in the area of the windings, forming channels (10),
- the inner of the two windings (3) which are in each case associated with one another concentrically is arranged on the outside of a first mounting cylinder (5) and the outer winding is arranged on the inside of a second mounting cylinder (6), with an annular gap (7) being formed between the first mounting cylinder and the binding,
- the two windings (3, 4) have a first associated annular chamber (11) on one end face, and have a second associated annular chamber (13) on the other end face,
with
- the first annular chamber (11) being connected to the coolant inlet,
- both annular chambers (12, 13) being provided with openings (12, 14) which lead into an intermediate space (25) between the two windings,
- and the second chamber (13) being adjacent to the core (2) and being open towards the annular gap (7) and towards the channels (10).

3. Transformer according to Claim 2,
**characterized**
**in that** rod-like spacers (9) are arranged at locations where the core has chord-like discrepancies from a circular cross section in order to approximate the cross section of the core (2) and the circumference of the binding (8) to a circle.

4. Transformer according to Claim 2,
**characterized**
**in that** the second mounting cylinder (6) is formed by a supporting binding.

## Revendications

1. Transformateur à refroidissement forcé par liquide, dans lequel le noyau (2) et les enroulements inférieur et supérieur de tension (3, 4), associés concentriquement l'un à l'autre, sont placés dans une chaudière (1) étanchéifiée et cette chaudière est munie d'un orifice d'admission (17) et d'un orifice de décharge (19) pour un agent refroidisseur (20) liquide qui parcourt l'espace intérieur de la chaudière et des surfaces conductrices destinées à guider l'agent refroidisseur sont disposées entre l'orifice d'admission et l'orifice de décharge,
**caractérisé en ce que**
les surfaces conductrices sont disposées de telle manière que le courant d'agent refroidisseur comporte plusieurs zones d'écoulement successives en direction d'écoulement parmi lesquelles, en direction d'écoulement, une première contient les enroulements (3, 4), une deuxième les branches (23, 24) - du noyau (2) - entourées par les enroulements et une troisième les autres parties (23, 24) du noyau et de la paroi du boîtier.

2. Transformateur selon la revendication 1, **caractérisé en ce que**
pour former les surfaces conductrices
- chacun des deux enroulements (3, 4) associés concentriquement à l'autre est disposé à distance aussi bien par rapport à l'autre que par rapport au noyau (2),
- le noyau qui tend en gradins vers la forme d'une section circulaire est muni d'une frette (8) dans la zone des enroulements en formant des canaux (10),
- parmi les deux enroulements (3) associés concentriquement, l'enroulement intérieur est placé sur le côté extérieur d'un premier cylindre de soutien (5) et l'enroulement extérieur sur le côté intérieur d'un deuxième cylindre de soutien (6),
un interstice annulaire (7) étant formé entre le premier cylindre de soutien et la frette,
- sur l'un des côtés frontaux une première chambre annulaire (11) est associée aux deux enroulements (3, 4) et sur l'autre côté frontal une deuxième chambre annulaire (13)
- la première chambre annulaire (11) étant reliée à l'orifice d'admission d'agent refroidisseur,
- les deux chambres annulaires (12, 13) sont munies d'orifices (12, 14) qui mènent dans l'espace intermédiaire (25) entre les deux enroulements et
- la deuxième chambre (13) avoisine le noyau (2) et débouche sur l'interstice annulaire (7) et sur les canaux (10).

3. Transformateur selon la revendication 2, **caractérisé en ce que**
pour que la section transversale du noyau (2) et le pourtour de la frette (8)tendent vers la forme d'un cercle, des écarteurs (9) en forme de barre sont disposés à des endroits où le noyau s'écarte en corde de la section circulaire.

4. Transformateur selon la revendication 2, **caractérisé en ce que**
le deuxième cylindre de soutien (6) est une frette de soutien.
